# EUROPEAN PATENT SPECIFICATION

(11) **EP 1 667 129 B1**
(45) Date of publication and mention of the grant of the patent: **17.03.2010**
(21) Application number: 05300915.5
(22) Date of filing: 14.11.2005
(51) Int. Cl.: G11B 7/013, G11B 7/135, G11B 7/125

(54) **Apparatus for recording angular multiplexed pits**
Vorrichtung zur Aufzeichnung winkelgemultiplexter Pits
Appareil pour l' enregistrement de creux angulaires multiplexés

(30) Priority: 02.12.2004 EP 04028544
(43) Date of publication of application: 07.06.2006
(73) Proprietor: Thomson Licensing, 92443 Issy-les-Moulineaux Cedex (FR)
(72) Inventor: Knittel, Joachim, 78532, Tuttlingen (DE); Richter, Hartmut, 78052, Villingen-Schwenningen (DE); Knappmann, Stephan, 78658, Zimmern ob Rottweil (DE)
(74) Representative: Thies, Stephan

(56) References cited:
- EP-A- 0 376 673
- EP-A- 0 633 565
- EP-A- 1 063 645
- WO-A-2004/059628
- PATENT ABSTRACTS OF JAPAN vol. 016, no. 216 (P-1356), 21 May 1992 (1992-05-21) -& JP 04 038720 A (OLYMPUS OPTICAL CO LTD), 7 February 1992 (1992-02-07)
- "DVD DISKS SHINE FROM ALL ANGLES" PHYSICS WORLD, BRISTOL, GB, November 2004 (2004-11), page 3, XP008047793
- [Online] XP002329755 Retrieved from the Internet: URL:http://physicsweb.org/articles/news/8/ 10/1/1> [retrieved on 2005-05-27]

## Description

The present invention relates to an apparatus for recording angular multiplexed pits on optical recording media using a device for generating a light beam with an asymmetric intensity distribution.

A well-known method to increase the storage capacity of optical recording media is to use a pit-substructure, e.g. the angular position of periodically aligned pits. This technology allows the storage of several bits of information in a single pit. Different pit shapes have been proposed to generate detectable angular signals, e.g. pits with one or more steps in depth, rotated "long pits", rotated "double-pits", etc. For example, in "*DVD disks shine from all angles*, Physics World November 2004", pits having an angular substructure in the form of a step being placed at one of 332 different angles is described. Illuminating non-rotational symmetric, reflective pit structures on a disk with a focused laser beam results in a non-rotational symmetric image on the detector. By using a special detector structure, it is possible to detect the angular substructure of the pits on the recording medium and to retrieve the stored information.

It is an object of the invention to propose an apparatus for efficiently recording angular multiplexed pits on optical recording media, and for mastering ROM recording media with angular multiplexed pits.

According to the invention, this object is achieved by an apparatus for recording angular multiplexed pits on optical recording media, including a device for generating a recording light beam with an asymmetric intensity distribution, which has at least one light influencing part for introducing a phase shift of 180 degrees in a first half of the light beam relative to the second half of the light beam, the border between the first half of the light beam and the second half of the light beam being rotatable around an optical axis of the light beam. By introducing a device for generating a recording light beam with an asymmetric intensity, e.g. a diffractive optical element, in front of the objective lens of a conventional laser recording system, an asymmetric intensity distribution is obtained in the focus of the objective lens. This leads to the generation of asymmetric pits. By rotating the border between the first half of the light beam and the second half of the light beam the asymmetric spot shape also rotates, which allows to record the pits at different angles.

For a practical recording system it is advantageous if the rotation is achieved in a very short time und preferentially without any mechanical movement. This is achieved with a liquid crystal (LC) element having electrodes that are arranged like the slices of a pie, i.e. like sectors of a circle. By applying a certain voltage to a sector, the transmitted light beam experiences a phase shift of 180°. By applying the voltage to several sectors simultaneously, the phase shift can be applied to exactly one half of the light beam. The number of sectors in this case determines the number of possible recording angles. By applying the same (including zero) voltage to all sectors, an optical pickup using this element is compatible with regular systems for optical recording media.

Preferably, the LC element is arranged in a reflective mode. In this case the light beam passes the LC element twice and the thickness of the LC layer can be reduced by a factor of two. This reduces the switching time of the LC element. In combination with ferroelectric liquid crystals switching times in the microsecond range are achieved.

For mastering a read-only optical recording medium with angular multiplexed pits with the apparatus according to the invention, it is necessary to illuminate the photoresist for each pit individually. To minimize the time for mastering, it is advantageous to be able to rotate the master with a constant speed. In this case a pulsed laser system, e.g. a pulsed diode laser, is favorably employed to avoid blurring of the pit structure.

A similar solution can also be used to directly write angular multiplexed pits on a write-once or a rewritable optical recording medium. The recording layer of the optical recording medium preferably consists of a phase-change medium, an organic dye or a photopolymer.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: depicts a device according to the invention for generating a light beam with an asymmetric intensity distribution,
- Fig. 2: schematically shows an intensity distribution in the focus spot generated with the device of Fig. 1, and
- Fig. 3: illustrates the electrode structure of a liquid crystal element according to the invention.

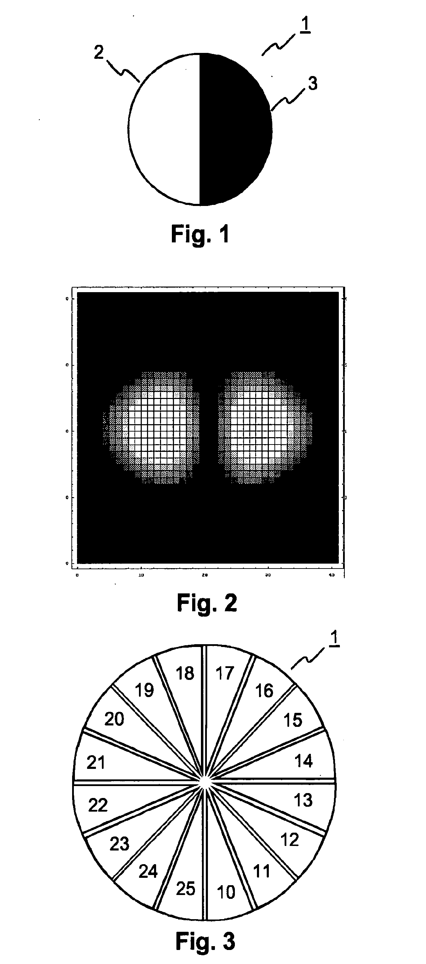

In Fig. 1 a device 1 according to the invention for generating a light beam with an asymmetric intensity distribution is shown. Such a device is preferably used in an apparatus for recording angular multiplexed pits on optical recording media. The device 1 is a diffractive optical element having a first half 2 and a second half 3. It introduces a phase shift of 180 degrees (π) in that part of a light beam which passes through the second half 3 relative to that part of the light beam which passes through the first half 2. The border between the first half 2 and the second half 3 advantageously runs through the center of the light beam, i.e. essentially one half of the light beam passes through the first half of the diffractive optical element 1, while the second half of the light beam passes through the second half 3. In this case, if the light beam is focused, in the focus spot the intensity distribution as depicted in Fig. 2 is generated. As can be seen, an asymmetric intensity distribution is obtained. This intensity distribution allows to record an asymmetric pit on the recording medium. By rotating the diffractive optical element the asymmetric spot shape also rotates, which allows to record the pits at different angles.

As preferably there is no mechanical movement of the diffractive optical element, the diffractive optical element is approximated by a liquid crystal element as shown in Fig. 3. The liquid crystal element has electrodes 10-25 that are arranged like the sectors of a circle. By applying a voltage to all sectors from number 10 to number 17, one half of the light beam is influenced by the LC-element. By applying the voltage to the sectors 11 to 18, the phase shift structure is rotated by one sector. The number of possible recording angles of the pits is determined by the number of sectors. Instead of the sectored liquid crystal element a diffractive optical element with sectors of an electro-optical material can also be used. In this case the electro-optical material changes the optical path length when a voltage is applied.

## Claims

1. Apparatus for recording angular multiplexed pits on optical recording media, **including** a device (1) for generating a recording light beam with an asymmetric intensity distribution, which has at least one light influencing part (3) for introducing a phase shift of 180 degrees in a first half of the light beam relative to the second half of the light beam, the border between the first half of the light beam and the second half of the light beam being rotatable around an optical axis of the light beam.

2. Apparatus according to claim 1, **wherein** the device (1) for generating a recording light beam with an asymmetric intensity distribution is a diffractive optical element.

3. Apparatus according to claim 1 or 2, **wherein** a rotation of the border between the first half of the light beam and the second half of the light beam around the optical axis of the light beam is achieved by rotating the device (1) for generating the recording light beam with an asymmetric intensity distribution.

4. Apparatus according to claim 2, **wherein** the diffractive optical element is a liquid crystal element having electrodes (10-25) that shaped like sectors of a circle.

5. Apparatus according to claim 4, **wherein** a rotation of the border between the first half of the light beam and the second half of the light beam around the optical axis of the light beam is achieved by applying a voltage to one half of the electrodes (10-25) of the liquid crystal element.

6. Apparatus according to claim 4 or 5, **wherein** the liquid crystal element is used in a reflective mode.

7. Apparatus according to one of claims 1 to 6, **wherein** the light beam is a pulsed light beam.

## Patentansprüche

1. Vorrichtung zum Aufzeichnen winkelgemultiplexter Pits auf optischen Aufzeichnungsmedien, enthaltend: eine Vorrichtung (1) zum Erzeugen eines Aufzeichnungslichtstrahls mit einer asymmetrischen Intensitätsverteilung, die mindestens ein Licht beeinflussendes Teil (3) zum Einführen einer Phasenverschiebung von 180 Grad in einer ersten Hälfte des Lichtstrahls relativ zu der zweiten Hälfte des Lichtstrahls aufweist, wobei die Grenze zwischen der ersten Hälfte des Lichtstrahls und der zweiten Hälfte des Lichtstrahls um eine optische Achse des Lichtstrahls drehbar ist.

2. Vorrichtung nach Anspruch 1, bei der die Vorrichtung (1) zum Erzeugen eines Aufzeichnungslichtstrahls mit einer asymmetrischen Intensitätsverteilung ein optisches Beugungselement ist.

3. Vorrichtung nach Anspruch 1 oder 2, bei der eine Drehung der Grenze zwischen der ersten Hälfte des Lichtstrahls und der zweiten Hälfte des Lichtstrahls um die optische Achse des Lichtstrahls dadurch erreicht wird, dass die Vorrichtung (1) zum Erzeugen des Aufzeichnungslichtstrahls mit einer asymmetrischen Intensitätsverteilung gedreht wird.

4. Vorrichtung nach Anspruch 2, bei der das optische Beugungselement ein Flüssigkristallelement mit kreissektorförmigen Elektroden (10-25) ist.

5. Vorrichtung nach Anspruch 4, bei der eine Drehung der Grenze zwischen der ersten Hälfte des Lichtstrahls und der zweiten Hälfte des Lichtstrahls um die optische Achse des Lichtstrahls durch Anlegen einer Spannung an eine Hälfte der Elektroden (10-25) des Flüssigkristallelements erreicht wird.

6. Vorrichtung nach Anspruch 4 oder 5, bei der das Flüssigkristallelement in einer Reflexionsbetriebsart verwendet wird.

7. Vorrichtung nach einem der Ansprüche 1 bis 6, bei der der Lichtstrahl ein gepulster Lichtstrahl ist.

## Revendications

1. Appareil d'enregistrement de creux multiplexés angulaires sur des supports d'enregistrement optiques, **incluant** un dispositif (1) de génération d'un faisceau lumineux d'enregistrement avec une distribution d'intensité asymétrique, qui possède au moins une partie (3) influant sur la lumière pour introduire un déplacement de phase de 180 degrés dans une première moitié du faisceau lumineux par rapport à la deuxième moitié du faisceau lumineux, la frontière entre la première moitié du faisceau lumineux et la deuxième moitié du faisceau lumineux pouvant pivoter autour d'un axe optique du faisceau lumineux.

2. Appareil selon la revendication 1, **dans lequel** le dispositif (1) de génération d'un faisceau lumineux d'enregistrement avec une distribution d'intensité asymétrique est un élément optique diffractif.

3. Appareil selon la revendication 1 ou 2, **dans lequel** une rotation de la frontière entre la première moitié du faisceau lumineux et la deuxième moitié du faisceau lumineux autour de l'axe optique du faisceau lumineux est réalisée grâce à une rotation du dispositif (1) de génération du faisceau lumineux d'enregistrement avec une distribution d'intensité asymétrique.

4. Appareil selon la revendication 2, **dans lequel** l'élément optique diffractif est un élément à cristaux liquides possédant des électrodes (10-25) formées comme des segments d'un cercle.

5. Appareil selon la revendication 4, **dans lequel** une rotation de la frontière entre la première moitié du faisceau lumineux et la deuxième moitié du faisceau lumineux autour de l'axe optique du faisceau lumineux est réalisée en appliquant une tension à une moitié des électrodes (10-25) de l'élément à cristaux liquides.

6. Appareil selon la revendication 4 ou 5, **dans lequel** l'élément à cristaux liquides est utilisé dans un mode réfléchissant.

7. Appareil selon une des revendications 1 à 6, **dans lequel** le faisceau lumineux est un faisceau lumineux à impulsions.
